# EUROPÄISCHE PATENTSCHRIFT

(11) **EP 4 341 918 B1**
(45) Veröffentlichungstag und Bekanntmachung des Hinweises auf die Patenterteilung: **06.05.2026**
(21) Anmeldenummer: 22747963.1
(22) Anmeldetag: 06.07.2022
(51) Int. Cl.: G06F 3/01, G06F 3/16, G03B 15/12, G03B 17/53, G06V 10/141, G06V 10/147, G06V 40/40, G06V 40/16, G07C 9/25, A47G 1/02, G02B 27/00

(54) **VORRICHTUNG UND VERFAHREN ZUR ERZEUGUNG EINES BIOMETRISCHEN BILDES EINES GESICHTS EINER PERSON**
DEVICE AND METHOD FOR GENERATING A BIOMETRIC IMAGE OF A PERSON'S FACE
DISPOSITIF ET PROCÉDÉ POUR PRODUIRE UNE IMAGE BIOMÉTRIQUE DU VISAGE D'UNE PERSONNE

(30) Priorität: 07.07.2021 DE 102021117532
(43) Veröffentlichungstag der Anmeldung: 27.03.2024
(73) Patentinhaber: Bundesdruckerei GmbH, 10969 Berlin (DE)
(72) Erfinder: SCHULTHEISS, Christoph, 85622 Feldkirchen (DE); PETERS, Florian, 10437 Berlin (DE)
(74) Vertreter: Hentrich Patent- & Rechtsanwaltspartnerschaft mbB
(86) Internationale Anmeldenummer: PCT/EP2022/068662
(87) Internationale Veröffentlichungsnummer: WO 2023/280892

(56) Entgegenhaltungen:
- EP-A1- 3 061 074
- EP-A1- 3 432 065
- CN-A- 111 434 280
- DE-A1- 102018 132 475
- US-A1- 2020 105 158
- DANIEL BESSERER ET AL: "Fitmirror", MULTIMODAL ANALYSES ENABLING ARTIFICIAL AGENTS IN HUMAN-MACHINE INTERACTION, ACM, 2 PENN PLAZA, SUITE 701 NEW YORK NY 10121-0701 USA, 12 November 2016 (2016-11-12), pages 48 - 55, XP058308178, ISBN: 978-1-4503-4562-0, DOI: 10.1145/3011263.3011265

## Beschreibung

Die Erfindung betrifft eine Vorrichtung und ein Verfahren zur Erzeugung eines biometrischen Bildes eines Gesichts einer Person.

Bilder für ein Identifikationsdokument oder für ein Sicherheitsdokument, wie beispielsweise Pässe oder andere Reisedokumente, müssen biometrischen Anforderungen entsprechen. Häufig werden diese Bilder durch einen Fotografen erstellt. Der Fotograf gibt dabei Anweisungen, um ein Bild aufzunehmen, welches den biometrischen Anforderungen genügt, wie beispielsweise die korrekte Ausrichtung der Person bezüglich der Kamera, ein geschlossener Mund und geöffnete Augen. Andererseits erfolgt die Beantragung eines solchen Sicherheitsoder Identifikationsdokuments üblicherweise in einer Behörde, also örtlich getrennt vom Fotografen. Für die Beantragung eines Sicherheitsdokuments oder eines Identifikationsdokuments muss sich die Person folglich zu zwei verschiedenen Orten für die Erstellung des Bildes und der Beantragung des Dokuments begeben. Darüber hinaus brauchen die aus dem Stand der Technik bekannten Passbildautomaten viel Platz und sind somit insbesondere auf kleinem Raum nicht einsetzbar.

Weiterhin werden auch im Rahmen einer automatisierten Zugangskontrolle biometrische Bilder von Personen aufgenommen, die mit einem biometrischen Bild eines Identifikationsdokuments abgeglichen werden. Um die Aufnahme eines biometrischen Bildes zu ermöglichen, werden der Person Anweisungen erteilt oder die Person wird auf verschiedene Anforderungen hingewiesen. Diese Anweisungen/Informationen können mitunter missverständlich sein, insbesondere wenn sie aufgrund von einer Sprachbarriere nicht verstanden werden, so dass das Verfahren mitunter zeitaufwendig ist.

In der US 2020 / 0 105 158 A1 wird ein digitalisierter "Schminkspiegel" beschrieben, der mithilfe einer erweiterten Realität Anweisungen zur Gesichtsbehandlung gibt.

In DANIEL BESSERER ET AL: "Fitmirror" MULTIMODAL ANALYSES ENABLING ARTIFICIAL AGENTS IN HUMAN-MACHINE INTERACTION, ACM, 2 PENN PLAZA, SUITE 701 NEW YORK NY 10121-0701 USA, 12. November 2016 (2016-11-12), Seiten 48-55, XP058308178, DOI: 10.1145/3011263.3011265; ISBN: 978-1-4503-4562-2, wird ein Konzept eines "smart mirror" beschrieben, der um ein "balance board" und eine "Kinect camera" ergänzt ist. Er soll einen Nutzer, der auf dem "balance board" steht, erkennen und anleiten, Fitnessübungen durchzuführen. In der CN111434280A ist ein ebenfalls ein solcher "smart mirror" beschrieben.

Die WO 2015/058948 A1 beschreibt eine Zugangskontrollstation, an der eine Sicherheitskontrolle durchgeführt werden kann. Hierbei werden Daten der Zutritt ersuchenden Person erfasst, welche beispielsweise biometrische Daten sein können. Hinter einem Spiegel ist eine Aufzeichnungseinrichtung verdeckt angeordnet. Die Zugangskontrollstation weist zudem einen Dokumentscanner und einen Drucker für die Anbringung von Stempeln auf einem präsentierten Identitätsdokument auf. Auf dem halbdurchlässigen Spiegel sind mittels einer Anzeigeeinrichtung Informationen darstellbar. Hierdurch kann die Person im Rahmen einer Nutzerführung dazu aufgefordert werden, ein Dokument zu platzieren oder das Gesicht zu positionieren. Es ist auch eine Sprachausgabe möglich. Die verdeckte Aufzeichnungseinrichtung weist eine Kamera auf. Auch eine Steuereinheit ist vorhanden.

Die EP 3 432 065 A1 beschreibt ebenfalls eine Vorrichtung zur Erfassung von Gesichtsbildern unter Nutzung eines Terminals. Das Terminal umfasst ein Lesegerät zum Scannen eines Passes. Hinter einem Spiegel liegen Kameralinsen vor, wobei mit letzteren das Gesichtsbild des Nutzers erfasst werden kann, um es mit dem gescannten Passbild abzugleichen. Die Kameralinsen können jeweils zwischen Anzeigevorrichtungen angeordnet sein.

Die DE102018132475A1 beschreibt eine Vorrichtung zur Erfassung biometrischer Merkmale eines Gesichts einer Person. Hierbei ist eine leuchtende Rückwand vorhanden, um Schatten in den Bildern "auszublenden". Im Strahlengang zwischen Kamera und Gesicht ist ein Umlenkspiegel vorhanden.

In der DE 10 2014 109 682 A1 wird ein mobiles Terminal zum Erfassen biometrischer Daten beschrieben, welches nach Art eines tragbaren Koffers gebildet ist.

In der US 2007 / 0047 774 A1 wird eine Vorrichtung zur Erfassung biometrischer Merkmale eines Gesichts einer Person beschrieben, das mit einem Display versehen ist, um dem Nutzer Anweisungen geben zu können.

Daher ist es Aufgabe der vorliegenden Erfindung, eine kompakte Vorrichtung und ein Verfahren zur Erzeugung eines biometrischen Bildes eines Gesichts einer Person bereitzustellen, welche eine vereinfachte Benutzerführung ermöglichen.

Diese Aufgabe wird durch eine Vorrichtung mit den Merkmalen des Anspruchs 1 und durch ein Verfahren mit den Merkmalen des Anspruchs 12 gelöst. Vorteilhafte Ausgestaltungen mit zweckmäßigen Weiterbildungen der Erfindung sind in den abhängigen Ansprüchen angegeben.

Die Vorrichtung zur Erzeugung eines biometrischen Bildes eines Gesichts einer Person mit einem teildurchlässigen Spiegel, dessen Fläche an der Vorderseite einfallendes Licht reflektiert und dessen Fläche an der der Vorderseite gegenüberliegenden Rückseite einfallendes Licht transmittiert, weist mindestens eine auf der Rückseite des teildurchlässigen Spiegels angeordnete Anzeigenvorrichtung auf, die auf die transmittierende Fläche der Rückseite des teildurchlässigen Spiegels gerichtet ist. Weiterhin ist mindestens eine Kamera vorhanden zur Aufnahme des Gesichts der Person, deren Strahlengang durch den teildurchlässigen Spiegel zum Gesicht der Person verläuft. Insbesondere sind eine Steuereinheit und eine Ausgabeeinheit vorhanden und eingerichtet, eine Information oder Anweisung als optische oder akustische Nutzerführung zur Erzeugung einer erweiterten Realität auszugeben.

Unter dem Begriff der erweiterten Realität wird eine computergestützte Erweiterung der Realitätswahrnehmung verstanden. Die Informationen oder Anforderungen können somit alle durch menschliche Sinnesmodalitäten/Sinnesorgane erfassbare Signale, d.h. beispielsweise optische oder akustische Signale, sein. Beispielsweise werden bei der erweiterten Realität Abbildungen oder Abbildungsfolgen, also Videos, mit computergenerierten Zusatzinformationen oder virtuellen Objekten mittels Einblendungen/Überlagerungen ergänzt. Bei einem teildurchlässigen Spiegel - auch venezianischer Spiegel genannt - wird das einfallende Licht auf der reflektierenden Vorderseite reflektiert, d.h. ein Gegenstand der vor der reflektierenden Vorderseite des teildurchlässigen Spiegels angeordnet ist, wird gespiegelt. Die Rückseite des transmittierenden Spiegels transmittiert das einfallende Licht hingegen, so dass eine Person, die auf der transmittierenden Rückseite des teildurchlässigen Spiegels angeordnet ist, durch den teildurchlässigen Spiegel hindurchsehen kann. Der Vorteil dieser Vorrichtung liegt somit darin, dass durch die optische oder akustische Nutzerführung zur Erzeugung einer erweiterten Realität der Nutzer/die Person einfacher auf die biometrischen Anforderungen hingewiesen werden kann und den Anweisungen leichter Folge leisten kann. Die Aufnahme oder Erzeugung eines biometrischen Bildes ist somit anwenderfreundlicher gestaltet. Darüber hinaus ist die Vorrichtung kompakt gestaltet. Die Vorrichtung kann bevorzugt an einer Wand oder an einem Ständer befestigt werden, oder auf einem Podest platziert werden, so dass sie platzsparend auch in kleineren Räumen, insbesondere in Behörden selbst, aufgestellt werden kann. Dies ermöglicht, dass Personen am selben Ort das biometrische Bild erstellen lassen können, an welchem sie auch das Identifikationsdokument beantragen. Die kompakte Ausbildung der Vorrichtung ermöglicht zudem möglichst viele solcher Vorrichtungen auf kleinem Raum für eine automatisierten Zugangskontrolle aufzustellen.

In einer bevorzugten Ausführungsform ist die Anzeigenvorrichtung auf der dem teildurchlässigen Spiegel abgewandten Rückseite der Kamera angeordnet. Dies ermöglicht einerseits, entsprechend eines Beispiels, das nicht Gegenstand der Erfindung ist, dass die Anzeigenvorrichtung nur ein Display aufweisen muss. Darüber hinaus ermöglicht dies, dass die Person sowohl das eigene Spiegelbild auf dem teildurchlässigen Spiegel, als auch die auf der Anzeigenvorrichtung angezeigten und auf den halbdurchlässigen Spiegel projizierten Informationen oder Anweisungen oder Bilder scharf sehen kann.

In einer alternativen Ausführungsform ist es bevorzugt, wenn die Kamera auf der dem teildurchlässigen Spiegel abgewandten Rückseite der Anzeigenvorrichtung angeordnet ist, und wenn der Strahlengang durch einen anzeigenvorrichtungsfreien Bereich und durch den teildurchlässigen Spiegel zum Gesicht der Person verläuft. In dieser Ausführungsform ist die Anzeigenvorrichtung folglich zwischen der Kamera und dem teildurchlässigen Spiegel angeordnet.

In einer weiteren alternativen Ausführungsform ist ein Umlenkspiegel vorhanden, mittels dem ein auf der Anzeigenvorrichtung angezeigtes Bild auf den teildurchlässigen Spiegel umgelenkt wird. Dies ermöglicht die Anzeigenvorrichtung an eine beliebige Stelle innerhalb der Vorrichtung anzuordnen.

Um die Vorrichtung möglichst kompakt zu halten, ist erfindungsgemäß vorgesehen, dass ein Umlenkspiegel vorhanden ist zur Faltung des zwischen der Kamera und dem Gesicht der Person verlaufenden Strahlengangs.

Zur vereinfachten Bedienung der Vorrichtung ist es bevorzugt, wenn dem teildurchlässigen Spiegel auf seiner reflektierenden Vorderseite ein berührungssensitives Touchscreen zugeordnet ist. Alternativ oder zusätzlich kann auch ein Bedienelement an dem Gehäuse oder neben dem Gehäuse angebracht sein.

Es ist die vorteilhafte Möglichkeit gegeben, dass der teildurchlässige Spiegel von einem Rahmen umrahmt ist, und dass an dem Rahmen Beleuchtungselemente angebracht sind, die eine Lichtleiste bilden. Diese Lichtleiste dient der guten Ausleuchtung des Gesichts, der Person bei der Erzeugung des biometrischen Bilds.

In diesem Zuge ist es von Vorteil, wenn sich die Lichtleiste ebenfalls rahmenartig entlang des gesamten Rahmens erstreckt, da dann eine besonders gute Ausleuchtung gegeben ist.

Es ist ferner bevorzugt, dass die Beleuchtungselemente separat ansteuerbar sind und angesteuert werden, um die Beleuchtungselemente der Lichtleiste mit unterschiedlicher Intensität und/oder nacheinander leuchten zu lassen. Auf diese Weise lässt sich anhand eines vorhandenen oder anhand eines fehlenden Schattenwurfs im Gesicht der Person überprüfen, ob die Person vor der Kamera eine echte, lebende Person ist, oder ob gegebenenfalls nur ein Foto einer Person vor die Kamera gehalten wird (Realisierung einer sogenannten PAD = "presentation attack detection").

Von Vorteil ist alternativ oder ergänzend, wenn die Lichtleiste ebenfalls rahmenartig verläuft und planflächig in den Rahmen eingebettet ist. Durch eine solche Ausgestaltung wird die Vorrichtung besonders kompakt gehalten, wobei eine gute Ausleuchtung des Gesichts möglich ist.

Eine einfache Bedienung der Vorrichtung ist dadurch ermöglicht, dass der teildurchlässige Spiegel selbst als ein berührungssensitiver Touchscreen gebildet ist.

Es ist alternativ die vorteilhafte Möglichkeit gegeben, dass die Anzeigenvorrichtung (oder auch alle Anzeigenvorrichtungen) als ein berührungssensitiver Touchscreen gebildet ist, und dass der teildurchlässige Spiegel zumindest teilweise elektrisch leitfähig ist, und derart mit der Anzeigenvorrichtung in Kontakt steht, dass der Touchscreen der Anzeigenvorrichtung durch den teildurchlässigen Spiegel hindurch betätigbar ist. Auf diese Weise kann die Vorrichtung insgesamt sehr platzsparend und kompakt gebildet werden.

Alternativ oder zusätzlich kann die Vorrichtung zur Vereinfachung der Benutzerführung mittels einer Gestenerkennung oder mittels einer Sprachsteuerung steuerbar sein.

In einer bevorzugten Ausführungsform ist die Ausgabeeinheit als die mindestens eine Anzeigenvorrichtung gebildet, wobei die Information oder Anweisung als optische Nutzerführung auf der Anzeigenvorrichtung angezeigt und durch den teildurchlässigen Spiegel transmittiert und somit sichtbar ist. Die Ausgabeeinheit wird also bevorzugt als die mindestens eine Anzeigenvorrichtung gebildet. Dies ermöglicht eine möglichst einfache visuelle/optische Nutzerführung.

Die mindestens eine Kamera kann als eine zweidimensionale Kamera gebildet sein, wobei es insbesondere bevorzugt ist, wenn die mindestens eine Kamera als eine dreidimensionale Kamera gebildet ist. Dies ermöglicht die Aufnahme von dreidimensionalen Bildern und ferner eine Orientierung der Person im Raum relativ bezüglich der Kamera.

Darüber hinaus kann die Vorrichtung auch eine Mehrzahl von Kameras aufweisen, insbesondere eine Mehrzahl von zweidimensionalen Kameras, aber auch eine Mehrzahl von dreidimensionalen Kameras, die im sichtbaren Bereich und/oder im Infrarotbereich optisch erfassen.

Um die optische Nutzerführung zur Erzeugung einer erweiterten Realität gut darstellen zu können, ist es bevorzugt, wenn mehrere Anzeigenvorrichtungen vorhanden sind, die derart zueinander angeordnet sind, dass ein anzeigenvorrichtungsfreier Bereich, durch den der Strahlengang der Kamera verläuft, zwischen ihnen gebildet ist. Dies stellt sicher, dass das Gesicht mit seinen biometrischen Merkmalen hinreichend genau erfasst werden kann. Dabei kann der anzeigenvorrichtungsfreie Bereich als eine Aussparung in der Anzeigenvorrichtung oder zwischen einer Mehrzahl von Anzeigenvorrichtungen angeordnet sein. Darüber hinaus, insbesondere zum Schutz der Optik, ist es auch möglich, dass dem anzeigenvorrichtungsfreien Bereich eine Glasscheibe zugeordnet oder in dieser angeordnet ist.

Weiterhin ist es bevorzugt, wenn der teildurchlässige Spiegel von einem Rahmen zumindest teilweise umrahmt ist, und wenn an oder in dem Rahmen mindestens ein Sensor angebracht ist. Der mindestens eine Sensor kann dabei als ein Lautsprecher und/oder als ein Beleuchtungselement und/oder als eine weitere Kamera, insbesondere eine Übersichtskamera und/oder eine Infrarotkamera und/oder eine Wärmebildkamera und/oder als ein Mikrofon für die Sprachsteuerung gebildet sein.

In diesem Zusammenhang ist es von Vorteil, wenn die Ausgabeeinheit oder eine zusätzliche Ausgabeeinheit als ein Lautsprecher gebildet ist, so dass eine akustische Nutzerführung zur Erzeugung einer erweiterten Realität möglich ist. Dies ermöglicht es, insbesondere blinden oder sehbehinderten Personen, den Anweisungen/Informationen zu folgen.

Damit die Vorrichtung für Personen mit verschiedener Größe verwendet und dabei dennoch kompakt gebaut werden kann, ist es von Vorteil, wenn der teildurchlässige Spiegel, die mindestens eine Anzeigenvorrichtung und die mindestens eine Kamera in einem Gehäuse angeordnet sind, und wenn das Gehäuse höhenverstellbar und/oder schwenkbar gelagert ist. In einer alternativen Ausführungsform ist es möglich, dass die mindestens eine Anzeigenvorrichtung und die mindestens eine Kamera in einem Gehäuse angeordnet sind, und dass das Gehäuse relativ zum Spiegel höhenverstellbar gelagert ist. Alternativ kann auch nur das optische System relativ zum Spiegel höhenverstellbar gelagert sein. Dies hätte den Vorteil, dass keine beweglichen Teile nach außen für die Person zugänglich sind, so dass die Verletzungsgefahr reduziert würde.

Das Verfahren zum Erzeugen eines biometrischen Bildes des Gesichts einer Person mit einer vorgehend beschriebenen Vorrichtung umfasst insbesondere die folgenden Schritte:

| | |
|---|---|
| A) | Positionieren einer Person vor der reflektierenden Vorderseite des halbdurchlässigen Spiegels derart, dass das Gesicht der Person auf der reflektierenden Fläche gespiegelt wird, |
| B) | Erfassen des Gesichts der Person durch die mindestens eine Kamera durch den teildurchlässigen Spiegel hindurch und Erzeugen einer ersten Abbildung oder einer ersten Abbildungsfolge, |
| C) | Überprüfen, ob die mittels der mindestens einer Kamera erzeugte Abbildung oder Abbildungsfolge mindestens einer vorgegebenen Anforderung genügt, |
| D) | bei Abweichen der erzeugten ersten Abbildung oder Abbildungsfolge von der mindestens einen vorgegebenen Anforderung, Ausgabe einer Information oder Anweisung in der Ausgabeeinheit als optische oder akustische Nutzerführung zur Erzeugung einer erweiterten Realität, und |
| E) | die Aufnahme einer weiteren Abbildung oder Abbildungsfolge durch die Kamera, insbesondere nach Korrektur bzw. Beseitigung der Abweichung im Schnitt D). |

Dies ermöglicht eine für die Person leicht zu erfassende Nutzerführung mittels einer erweiterten Realität. Insbesondere wird das Verfahren so lange wiederholt, bis alle vorgegebenen Anforderungen, insbesondere die Anforderungen an ein biometrisches Bild erfüllt sind. Das Verfahren kann zum Einen im Rahmen der Erzeugung eines biometrischen Bildes oder im Rahmen einer automatisierten Zugangskontrolle durchgeführt werden.

Beim Verfahren ist es zudem bevorzugt, wenn eine erweiterte Lebenderkennung des Anwenders durchgeführt wird. Die erweiterte Lebenderkennung kann beispielsweise mittels Bewegungsprofilen oder mittels Infrarotmessungen mittels einer Infrarotkamera erfolgen.

In diesem Zusammenhang ist es ebenfalls von Vorteil, wenn durch Auflage eines Identifikationsdokuments auf die reflektierende Fläche des halbdurchlässigen Spiegels oder auf ein Lesegerät, das Identifikationsdokument ausgelesen wird. Die Steuereinheit kann dann das erzeugte biometrische Bild mit dem biometrischen Bild des Identifikationsdokuments vergleichen und bei Übereinstimmung der Bilder/biometrischen Merkmale den Zugang gewähren; bei Abweichung den Zugang verwehren. Alternativ ist es auch von Vorteil, wenn das Identifikationsdokument in der Schärfentiefenebene der Person bezüglich der Kamera vorgezeigt wird, die Person also das Identifikationsdokument in dem durch die optische Kamera erfassbaren Bereich hält. Dies ermöglicht, dass die Kamera das Identifikationsdokument optisch erfasst und die Steuereinheit das erzeugte biometrische Bild mit dem biometrischen Bild des Identifikationsdokuments vergleicht.

Um Personen verschiedener Größe mittels der Vorrichtung erfassen zu können, ist es bevorzugt, wenn das Gehäuse der Vorrichtung bezüglich der Person höhenverstellt wird, bis das Gesicht der Person vollständig mittels der Kamera erfasst werden kann. Insbesondere ist es in diesem Zusammenhang bevorzugt, wenn das Gehäuse der Vorrichtung bezüglich der Person höhenverstellt wird, bis das Gesicht der Person mittig bezüglich der von der Kamera optisch erfassbaren Bereichs, also mittig zur optischen Achse ausgerichtet ist. Dies verringert die optischen Abbildungsfehler.

Weiterhin ist es insbesondere von Vorteil, wenn die Steuereinheit eine Positionsbestimmung einer Mehrzahl von Orientierungspunkten in der mindestens einen Abbildung oder Abbildungsfolge bezüglich der Kamera durchführt. Anhand der Orientierungspunkte und deren Position lassen sich die biometrischen Anforderungen der Abbildung überprüfen. Zudem kann anhand der Orientierungspunkte, insbesondere bezüglich der Kamera und bezüglich des Raums eine Größenmessung des Anwenders, sowie eine biometrische Vermessung des Anwenders erfolgen.

In diesem Zusammenhang ist es weiterhin bevorzugt, wenn die Steuereinheit die Ausgabe der Information oder Anweisung mindestens einem der Orientierungspunkte zuordnet, derart, dass die Information oder Anweisung, also beispielsweise ein Text, ein Symbol oder das Gesicht selber, auf der Anzeigenvorrichtung im Bereich des dem Orientierungspunkt entsprechenden Punkts auf der Abbildung und/oder auf dem durch den teildurchlässigen Spiegel erzeugten Spiegelbild des Gesichts der Person eingeblendet wird. Dies ermöglicht eine optische Nutzerführung zur Erzeugung einer erweiterten Realität.

Insbesondere können die vorbestimmten Orientierungspunkte der Mund und/oder die Mundwinkel und/oder die Augen und/oder die Augenwinkel und/oder das Kinn und/oder die Nase und/oder die Nasenspitze sein. Dies ermöglicht Anforderungen/Informationen den Orientierungspunkten im Gesicht der Person zuzuordnen, also einzublenden, für die sie relevant sind. Beispielsweise kann eine Anweisung, die Augen zu öffnen, den Orientierungspunkten der Augen oder der Augenwinkel zugeordnet werden und somit im Bereich der Augen/Augenwinkel auf der Abbildung oder auf dem Spiegelbild eingeblendet sein. Der Hinweis, den Mund zu schließen, kann wiederum dem Mund oder Mundwinkel zugeordnetem Orientierungspunkt zugeordnet und dort angezeigt werden.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar. Es sind somit auch Ausführungen als von der Erfindung umfasst und offenbart anzusehen, die in den Figuren nicht explizit gezeigt und erläutert sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Seitenansicht der Vorrichtung zur Erzeugung eines biometrischen Bildes,
- Fig. 2: eine Rückansicht der Vorrichtung zur Erzeugung eines biometrischen Bildes aus Figur 1; und
- Fig. 3: eine Vorderansicht der Vorrichtung zur Erzeugung eines biometrischen Bildes aus Figur 1.

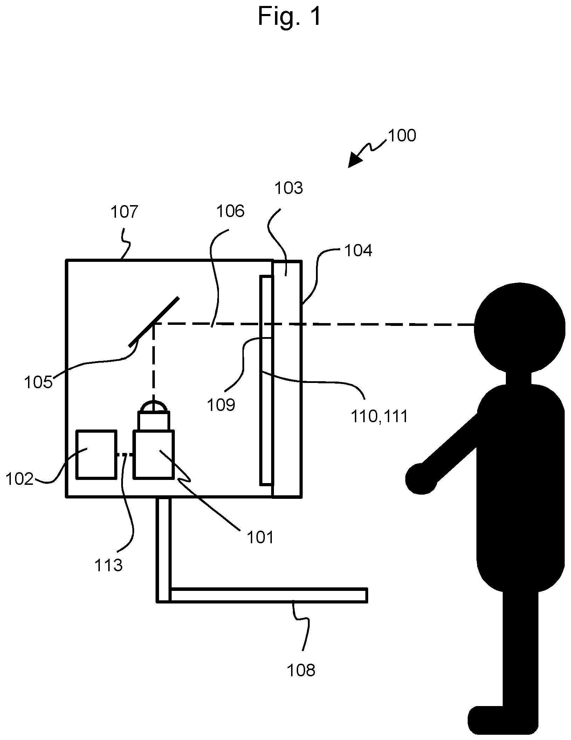

Figur 1 zeigt eine Seitenansicht der Vorrichtung 100 zur Erzeugung eines biometrischen Bildes eines Gesichts einer Person. Die Vorrichtung 100 weist einen teildurchlässigen, vorliegend einen halbdurchlässigen Spiegel 103 auf, dessen Fläche an der Vorderseite 104 einfallendes Licht reflektiert und dessen Fläche an der der Vorderseite 104 gegenüberliegenden Rückseite 109 einfallendes Licht transmittiert. Weiterhin ist mindestens eine auf der Rückseite 109 des teildurchlässigen Spiegels 103 angeordnete Anzeigenvorrichtung 110 vorhanden, die auf die transmittierende Fläche der Rückseite 109 des teildurchlässigen Spiegels 103 gerichtet ist. Weiterhin ist mindestens eine Kamera 101 zur Aufnahme des Gesichts der Person in dem Gehäuse 107 angeordnet, wobei die Kamera 101 auf der dem teildurchlässigen Spiegel 103 abgewandten Rückseite der Anzeigenvorrichtung 110 angeordnet ist und ihr Strahlengang durch einen anzeigenvorrichtungsfreien Bereich 112 und durch den teildurchlässigen Spiegel 103 zum Gesicht der Person verläuft. Die Kamera 101 und auch die Anzeigenvorrichtung 110 sind über eine Kommunikationsverbindung 113 mit einer Steuereinheit 102 verbunden. Zudem ist eine Ausgabeeinheit 111 vorgesehen, die ebenfalls mit der Steuereinheit 102 in Kommunikationsverbindung steht. Die Steuereinheit 102 und die Ausgabeeinheit 111 sind eingerichtet, eine Information oder Anweisung als optische oder akustische Nutzerführung zur Erzeugung einer erweiterten Realität auszugeben. Außerdem weist die Vorrichtung 100 zusätzlich einen Umlenkspiegel 105 auf zur Faltung des zwischen der Kamera 101 und dem Gesicht der Person verlaufenden Strahlengangs 106. Dies ermöglicht eine kompakte Bauweise der Vorrichtung 100. Der teildurchlässige Spiegel 103, die mindestens eine Anzeigenvorrichtung 110 und die mindestens eine Kamera 101, sowie der Umlenkspiegel 105 und die Steuereinheit 102 sind in einem Gehäuse 107 angeordnet, wobei dieses Gehäuse 107 höhenverstellbar und schwenkbar ist. Die Vorrichtung 100 lässt sich alternativ oder ergänzend an einer nicht näher dargestellten Wand montieren.

Die Vorrichtung 100 weist optional ein Lesegerät 108 auf. Auf das Lesegerät kann ein Identifikationsdokument aufgelegt und damit ausgelesen werden. Dem teildurchlässigen Spiegel 103 ist vorzugsweise auf seiner reflektierenden Vorderseite 104 ein berührungssensitives Touchscreen zugeordnet, mit dem die Vorrichtung 100 bedient werden kann. Alternativ oder zusätzlich lässt sich die Vorrichtung 100 auch über eine Gestenerkennung und/oder eine Sprachsteuerung steuern. Vorliegend ist die Ausgabeeinheit 111 als die mindestens eine Anzeigenvorrichtung 110 gebildet. Die Information oder Anweisung wird somit als optische Nutzerführung auf der Anzeigenvorrichtung 110 angezeigt und durch den halbtransparenten Spiegel 103 transmittiert, wodurch die Information/Anweisung auf dem teildurchlässigen Spiegel 103 für die Person/Nutzer erfassbar oder sichtbar ist. Die mindestens eine Kamera 101 ist vorliegend als eine dreidimensionale Kamera gebildet.

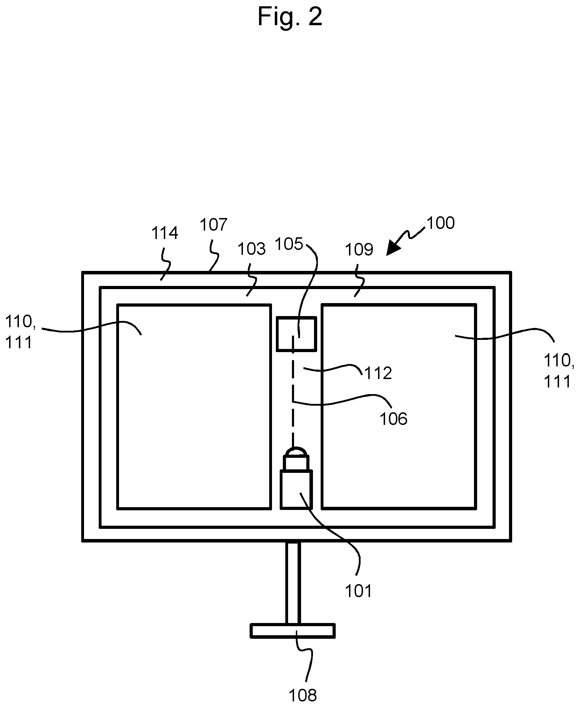

Figur 2 zeigt eine Rückansicht der Vorrichtung 100 zur Erzeugung eines biometrischen Bildes. Dabei wird deutlich, dass die Vorrichtung 100 bevorzugt mehrere Anzeigenvorrichtungen 110, vorliegend zwei Anzeigenvorrichtungen 110 aufweist, die derart zueinander angeordnet sind, dass der anzeigenvorrichtungsfreie Bereich 112, durch den der Strahlengang 106 der Kamera 101 verläuft, zwischen ihnen gebildet ist, also zwischen ihnen verläuft. Zudem erkennt man anhand von Figur 2, dass der teildurchlässige Spiegel 103 von einem Rahmen 114 umrahmt ist. An dem Rahmen 114 kann eine Mehrzahl von nicht näher dargestellten Sensoren angebracht sein. Die Sensoren können dabei als weitere Kameras gebildet sein, insbesondere als eine Übersichtskamera im visuellen Wellenlängenbereich und/oder eine Infrarotkamera für die Lebenderkennung und/oder als eine weitere zwei- oder dreidimensionale Kamera. Zudem ist es auch möglich, dass die Sensoren als Lautsprecher gebildet sind. So kann eine zusätzliche Ausgabeeinheit 111 vorhanden sein, die als ein Lautsprecher gebildet ist, so dass die Informationen oder Anweisungen für eine akustische Nutzerführung zur Erzeugung einer erweiterten Realität ausgegeben werden können. An dem Rahmen 114 können auch Beleuchtungselemente, insbesondere Lichtleisten angebracht werden, welche eine optimale Be- und Ausleuchtung des Gesichts der Person sicherstellen. Für die Spracherkennung können ebenso Mikrofone vorhanden sein.

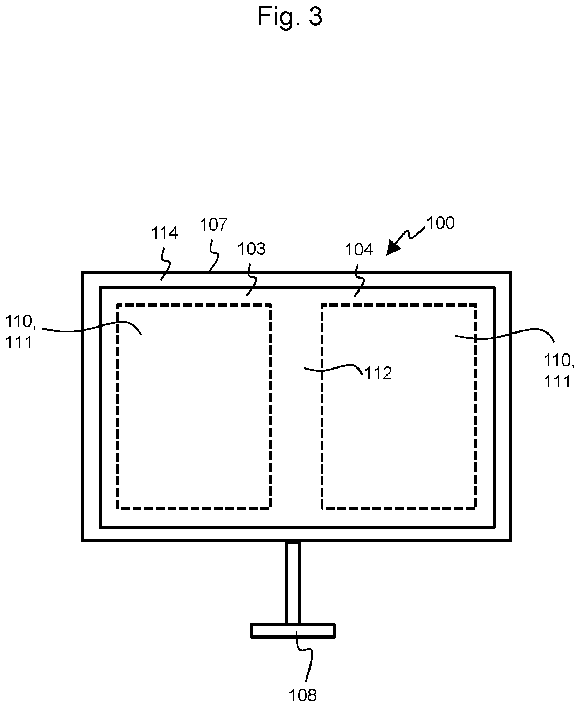

Figur 3 zeigt eine Vorderansicht der Vorrichtung 100, in der die beiden Anzeigenvorrichtungen 110 durch gestrichelte Linien dargestellt sind.

Das Verfahren zum Erzeugen eines biometrischen Bildes des Gesichts einer Person durch die vorgehend beschriebene Vorrichtung 100 umfasst insbesondere die folgenden Schritte: Zunächst wird die Person vor der reflektierenden Vorderseite 104 des teildurchlässigen Spiegels 103 derart positioniert, dass sich das Gesicht der Person auf der reflektierenden Fläche 104 spiegelt. Eventuell wird das Gehäuse 107 der Vorrichtung 100 höhenverstellt, bis das Gesicht vollständig durch die Kamera abbildbar ist und somit vollständig auf der reflektierenden Vorderseite 104 des teildurchlässigen Spiegels 103 gespiegelt wird. Im Anschluss wird das Gesicht der Person durch die mindestens eine Kamera 101, durch den teildurchlässigen Spiegel 103 hindurch erfasst und so eine erste Abbildung oder eine erste Abbildungsfolge erzeugt. Die erzeugte erste Abbildung oder Abbildungsfolge wird mittels der Steuereinheit 102 dahingehend überprüft, ob diese den vorgegebenen Anforderungen, insbesondere den Anforderungen an ein biometrisches Bild genügen. Bei Abweichung der erzeugten ersten Abbildung oder Abbildungsfolge von mindestens einer der vorgegebenen Anforderung wird eine entsprechende Information oder Anweisung in der Ausgabeeinheit 111 als visuelle oder akustische Nutzerführung zur Erzeugung einer erweiterten Realität ausgegeben. Schließlich wird eine weitere Abbildung oder eine weitere Abbildungsfolge durch die Kamera 101 erzeugt.

Die Steuereinheit 102 führt bevorzugt eine Positionsbestimmung einer Mehrzahl von Orientierungspunkten in der mindestens eine Abbildung oder Abbildungsfolge bezüglich der Kamera 101 durch. Die Orientierungspunkte sind dabei bevorzugt der Mund und/oder die Mundwinkel und/oder die Augen und/oder die Augenwinkel und/oder das Kinn und/oder die Nase und/oder die Nasenspitze. Anhand dieser Mehrzahl von Orientierungspunkten kann eine biometrische Vermessung des Anwenders sowie eine Größenmessung des Anwenders erfolgen. Zur Erzeugung einer visuellen erweiterten Realität ist es bevorzugt, wenn die Steuereinheit 102 die Ausgabe der Information oder Anweisung mindestens einen der Orientierungspunkte zuordnet, derart, dass die Information oder Anweisung auf der Anzeigenvorrichtung 110 im Bereich des dem Orientierungspunkt entsprechenden Punkts auf der Abbildung und/oder auf dem Spiegelbild eingeblendet wird. Dies ermöglicht eine nutzerfreundliche Nutzerführung, da beispielsweise der Hinweis die Augen zu öffnen, den Orientierungspunkten der Augen oder Augenwinkeln zugeordnet und den Augen auf der mittels der Anzeigenvorrichtung 110 angezeigten Abbildung oder den Augen auf dem Spiegelbild des halbdurchlässigen Spiegels eingeblendet wird. Ebenso kann der Hinweis, den Mund zu schließen, dem Mund oder den Mundwinkeln auf der mittels der Anzeigenvorrichtung 110 angezeigten Abbildung oder auf dem Mund/Mundwinkel des Spiegelbilds angezeigt werden.

Als Orientierungspunkte werden vorzugsweise bereits normierte Merkmalspunkte genutzt, wie sie in der Anlage C der der ISO/IEC 14496-2:2004 genannt und enthalten sind. Den Augen sind darin die Orientierungspunkte 3.1. bis 3.14 zugeordnet (rechtes Auge: Pupille 3.6, Augenwinkel 3.8 und 3.12; linkes Auge: Pupille 3.5, Augenwinkel 3.7 und 3.11). Dem Mund bzw. den Lippen sind die Orientierungspunkte 2.2 bis 2.9 bzw. 8.1 bis 8.10 zugeordnet (Die Mundwinkel bilden die Paare 2.4 mit 8.3 und 2.5 mit 8.4). Dem Kinn sind die Orientierungspunkte 2.1 und 2.12 bis 2.14 zugeordnet. Der Nase sind darin die Orientierungspunkte 9.1 bis 9.7 sowie 9.12 bis 9.15 zugeordnet, wobei die Nasenspitze durch den Merkmalspunkt 9.3 charakterisiert wird.

### BEZUGSZEICHENLISTE

- 100: Vorrichtung
- 101: Kamera
- 102: Steuereinheit
- 103: Spiegel
- 104: reflektierende Fläche/reflektierende Vorderseite
- 105: Spiegel
- 106: Strahlengang (Kamera)
- 107: Gehäuse
- 108: Lesegerät
- 109: transmittierende Fläche/transmittierende Rückseite
- 110: Anzeigenvorrichtung
- 111: Ausgabeeinheit
- 112: anzeigenvorrichtungsfreien Bereich
- 113: Kommunikationsverbindung (Kamera)
- 114: Rahmen

## Patentansprüche

1. Vorrichtung (100) zur Erzeugung eines biometrischen Bildes eines Gesichts einer Person mit einem teildurchlässigen Spiegel (103), dessen Fläche an der Vorderseite (104) reflektiert und dessen Fläche an der der Vorderseite (104) gegenüberliegenden Rückseite (109) transmittiert,
mit mindestens einer auf der Rückseite (109) des teildurchlässigen Spiegels (103) angeordneten Anzeigenvorrichtung (110), die auf die transmittierende Fläche der Rückseite (109) des teildurchlässigen Spiegels (103) gerichtet ist, und mit mindestens einer Kamera (101) zur Aufnahme des Gesichts der Person, deren Strahlengang durch den teildurchlässigen Spiegel (103) zum Gesicht der Person verläuft, sowie mit einer Steuereinheit (102) und einer Ausgabeeinheit (111), die eingerichtet sind, eine Information oder Anweisung als optische oder akustische Nutzerführung auszugeben, wobei die Steuereinheit (102) und die Ausgabeeinheit (111) eingerichtet sind, die Information oder Anweisung als optische oder akustische Nutzerführung zur Erzeugung einer erweiterten Realität auszugeben, und dass mehrere Anzeigenvorrichtungen (110) vorhanden sind, die derart zueinander angeordnet sind, dass ein anzeigenvorrichtungsfreier Bereich (112), durch den der Strahlengang (106) der Kamera (101) verläuft, zwischen ihnen gebildet ist, wobei ein zusätzlicher Umlenkspiegel (105) vorhanden ist, zur Faltung des zwischen der Kamera (101) und dem Gesicht der Person verlaufenden Strahlengangs (106).

2. Vorrichtung (100) nach Anspruch 1, **dadurch gekennzeichnet, dass** die Ausgabeeinheit (111) als die mindestens eine Anzeigenvorrichtung (110) gebildet ist, und dass die Information oder Anweisung als optische Nutzerführung auf der Anzeigenvorrichtung (110) angezeigt und auf dem teildurchlässigen Spiegel (103) sichtbar ist.

3. Vorrichtung (100) nach Anspruch 1 oder 2, **dadurch gekennzeichnet, dass** die mindestens eine Kamera (101) als eine dreidimensionale Kamera gebildet ist.

4. Vorrichtung (100) nach einem der Ansprüche 1 bis 3, **dadurch gekennzeichnet, dass** der teildurchlässige Spiegel (103) von einem Rahmen (114) zumindest teilweise umrahmt ist, und dass an oder in dem Rahmen (114) mindestens ein Sensor angebracht ist.

5. Vorrichtung (100) nach einem der Ansprüche 1 bis 3, **dadurch gekennzeichnet, dass** der teildurchlässige Spiegel (103) von einem Rahmen (114) umrahmt ist, und dass an dem Rahmen Beleuchtungselemente angebracht sind, die eine Lichtleiste bilden.

6. Vorrichtung (100) nach Anspruch 5, **dadurch gekennzeichnet, dass** die Lichtleiste ebenfalls rahmenartig sich entlang des gesamten Rahmens (114) erstreckt

7. Vorrichtung (100) nach Anspruch 5 oder 6, **dadurch gekennzeichnet, dass** die Beleuchtungselemente separat ansteuerbar sind und angesteuert werden, um die Beleuchtungselemente der Lichtleiste mit unterschiedlicher Intensität und/oder nacheinander leuchten zu lassen.

8. Vorrichtung (100) nach einem der Ansprüche 5 bis 7, **dadurch gekennzeichnet, dass** die Lichtleiste ebenfalls rahmenartig verläuft und planflächig in den Rahmen (114) eingebettet ist.

9. Vorrichtung (100) nach einem der Ansprüche 1 bis 8, **dadurch gekennzeichnet, dass** der teildurchlässige Spiegel (103) selbst als ein berührungssensitiver Touchscreen gebildet ist.

10. Vorrichtung (100) nach einem der Ansprüche 2 bis 9, **dadurch gekennzeichnet, dass** die Anzeigenvorrichtung (110) als ein berührungssensitiver Touchscreen gebildet ist, und dass der teildurchlässige Spiegel (103) zumindest teilweise elektrisch leitfähig ist und derart mit der Anzeigenvorrichtung in Kontakt steht, dass der Touchscreen der Anzeigenvorrichtung (110) durch den teildurchlässigen Spiegel (103) hindurch betätigbar ist.

11. Vorrichtung (100) nach einem der Ansprüche 1 bis 10, **dadurch gekennzeichnet, dass** der teildurchlässige Spiegel (103), die mindestens eine Anzeigenvorrichtung (110) und die mindestens eine Kamera (101) in einem Gehäuse (107) angeordnet sind, und dass das Gehäuse (107) höhenverstellbar ist.

12. Verfahren zum Erfassen eines biometrischen Bildes des Gesichts einer Person mit einer Vorrichtung (100) nach einem der Ansprüche 1 bis 11 umfassend die Schritte:
| | |
|---|---|
| A) | Positionieren einer Person vor die reflektierende Vorderseite (104) des teildurchlässigen Spiegels (103) derart, dass das Gesicht der Person auf der reflektierenden Fläche (104) gespiegelt wird, |
| B) | Erfassen des Gesichts der Person durch die mindestens eine Kamera (101) durch den teildurchlässigen Spiegel (103) hindurch und Erzeugen einer ersten Abbildung oder einer ersten Abbildungsfolge, |
| C) | Überprüfen, ob die mittels der mindestens einen Kamera (101) erzeugte Abbildung oder Abbildungsfolge mindestens einer vorgegebenen Anforderung genügt, |
| D) | Bei Abweichung der erzeugten ersten Abbildung oder Abbildungsfolge von der mindestens einen vorgegebenen Anforderung, Ausgabe einer Information oder Anweisung in der Ausgabeeinheit (111) als optische oder akustische Nutzerführung zur Erzeugung einer erweiterten Realität, und |
| E) | Aufnahme einer weiteren Abbildung oder Abbildungsfolge durch die Kamera (101). |

13. Verfahren nach Anspruch 12, **dadurch gekennzeichnet, dass** die Steuereinheit (102) eine Positionsbestimmung einer Mehrzahl von Orientierungspunkten in der mindestens einen Abbildung oder Abbildungsfolge bezüglich der Kamera (101) durchführt.

14. Verfahren nach Anspruch 13, **dadurch gekennzeichnet, dass** die Steuereinheit (102) die Ausgabe der Information oder Anweisung mindestens einem der Orientierungspunkte zuordnet, derart, dass die Information oder Anweisung auf der Anzeigenvorrichtung (110) im Bereich des dem Orientierungspunkt entsprechenden Punkts auf der Abbildung und/oder auf dem Spiegelbild eingeblendet wird.

15. Verfahren nach Anspruch 13 oder 14, **dadurch gekennzeichnet, dass** die vorbestimmten Orientierungspunkte der Mund und/oder die Mundwinkel und/oder die Augen und/oder die Augenwinkel und/oder das Kinn und/oder die Nase und/oder die Nasenspitze sind.

## Claims

1. A device (100) for generating a biometric image of a person's face, comprising a partially transparent mirror (103) whose front surface (104) is reflective and whose rear surface (109), opposite the front surface (104), is transmissive, with at least one display device (110) arranged on the rear side (109) of the partially transparent mirror (103), which is directed toward the transmitting surface of the rear side (109) of the partially transparent mirror (103), and comprising at least one camera (101) for capturing the face of the person, the optical path of which passes through the partially transparent mirror (103) to the face of the person, as well as a control unit (102) and an output unit (111) configured to output information or instructions as visual or auditory user guidance, wherein the control unit (102) and the output unit (111) are configured to output the information or instruction as visual or acoustic user guidance to generate an augmented reality, and that a plurality of display devices (110) are provided, which are arranged relative to one another such that a display-device-free area (112), through which the optical path (106) of the camera (101) passes, is formed between them, wherein an additional deflecting mirror (105) is provided for folding the optical path (106) extending between the camera (101) and the person's face.

2. The device (100) according to claim 1, **characterized in that** the output unit (111) is configured as the at least one display device (110), and that the information or instruction is displayed as optical user guidance on the display device (110) and is visible on the partially transparent mirror (103).

3. The device (100) according to claim 1 or 2, **characterized in that** the at least one camera (101) is configured as a three-dimensional camera.

4. The device (100) according to any one of claims 1 to 3, **characterized in that** the partially transparent mirror (103) is at least partially framed by a frame (114), and that at least one sensor is mounted on or in the frame (114).

5. The device (100) according to any one of claims 1 to 3, **characterized in that** the partially transparent mirror (103) is framed by a frame (114), and **in that** lighting elements are mounted on the frame to form a light strip.

6. The device (100) according to claim 5, **characterized in that** the light strip also extends in a frame-like manner along the entire frame (114).

7. The device (100) according to claim 5 or 6, **characterized in that** the lighting elements are controllable separately and are controlled to cause the lighting elements of the light strip to illuminate with varying intensity and/or sequentially.

8. The device (100) according to any one of claims 5 to 7, **characterized in that** the light strip also extends in a frame-like manner and is embedded flush into the frame (114).

9. The device (100) according to any one of claims 1 to 8, **characterized in that** the partially transparent mirror (103) itself is formed as a touch-sensitive touchscreen.

10. The device (100) according to any one of claims 2 to 9, **characterized in that** the display device (110) is formed as a touch-sensitive touchscreen, and that the partially transparent mirror (103) is at least partially electrically conductive and is in contact with the display device in such a way that the touchscreen of the display device (110) can be operated through the partially transparent mirror (103).

11. The device (100) according to any one of claims 1 to 10, **characterized in that** the partially transparent mirror (103), the at least one display device (110), and the at least one camera (101) are arranged in a housing (107), and that the housing (107) is height adjustable.

12. A method for capturing a biometric image of a person's face using a device (100) according to any one of claims 1 to 11, comprising the steps of:
| | |
|---|---|
| A) | positioning of a person in front of the reflective front surface (104) of the partially transparent mirror (103) such that the person's face is reflected on the reflective surface (104), |
| B) | capturing the person's face via the at least one camera (101) through the partially transparent mirror (103) and generating a first image or a first sequence of images, |
| C) | checking whether the image or image sequence generated by the at least one camera (101) meets at least one predetermined requirement, |
| D) | if the generated first image or sequence of images deviates from the at least one specified requirement, outputting information or instructions in the output unit (111) as visual or auditory user guidance to create an augmented reality, and |
| E) | capturing a further image or sequence of images by the camera (101). |

13. The method according to claim 12, **characterized in that** the control unit (102) performs a position determination of a plurality of reference points in the at least one image or sequence of images relative to the camera (101).

14. The method according to claim 13, **characterized in that** the control unit (102) assigns the output of the information or instruction to at least one of the feature points such that the information or instruction is displayed on the display device (110) in the area of the point on the image and/or on the mirror image corresponding to the feature point.

15. The method according to claim 13 or 14, **characterized in that** the predetermined feature points are the mouth and/or the corners of the mouth and/or the eyes and/or the corners of the eyes and/or the chin and/or the nose and/or the tip of the nose.

## Revendications

1. Dispositif (100) de génération d'une image biométrique d'un visage d'une personne avec un miroir (103) partiellement transparent, dont la surface réfléchit au niveau du côté avant (104) et dont la surface transmet au niveau du côté arrière (109) opposé au côté avant (104),
avec au moins un dispositif d'affichage (110) agencé sur le côté arrière (109) du miroir (103) partiellement transparent, qui est dirigé sur la surface transmettrice du côté arrière (109) du miroir (103) partiellement transparent et avec au moins une caméra (101) pour la prise du visage de la personne, dont le trajet des rayons s'étend à travers le miroir (103) partiellement transparent vers le visage de la personne, ainsi qu'avec un dispositif de commande (102) et une unité de sortie (111) qui sont conçus afin d'émettre une information ou une instruction comme guidage utilisateur optique ou acoustique, dans lequel le dispositif de commande (102) et l'unité de sortie (111) sont conçus afin d'émettre l'information ou l'instruction comme guidage utilisateur optique ou acoustique pour la génération d'une réalité augmentée, et en ce que plusieurs dispositifs d'affichage (110) sont présents, lesquels sont agencés les uns par rapport aux autres de telle manière qu'une zone (112) dépourvue dispositif d'affichage à travers laquelle s'étend le trajet des rayons (106) de la caméra (101), soit formée entre eux, dans lequel un miroir de renvoi (105) supplémentaire est présent pour la convolution du trajet des rayons (106) s'étendant entre la caméra (101) et le visage de la personne.

2. Dispositif (100) selon la revendication 1, **caractérisé en ce que** l'unité de sortie (111) est formée comme le au moins un dispositif d'affichage (110) et **en ce que** l'information ou l'instruction est affichée comme guidage utilisateur optique sur le dispositif d'affichage (110) et est visible sur le miroir (103) partiellement transparent.

3. Dispositif (100) selon la revendication 1 ou 2, **caractérisé en ce que** la au moins une caméra (101) est formée comme une caméra en trois dimensions.

4. Dispositif (100) selon l'une quelconque des revendications 1 à 3, **caractérisé en ce que** le miroir (103) partiellement transparent est encadré au moins partiellement par un cadre (114), et **en ce qu'**au moins un capteur est monté au niveau du cadre (114) ou dans celui-ci.

5. Dispositif (100) selon l'une quelconque des revendications 1 à 3, **caractérisé en ce que** le miroir (103) partiellement transparent est encadré par un cadre (114), et **en ce que** des éléments d'éclairage sont montés au niveau du cadre, éléments qui forment une barrette lumineuse.

6. Dispositif (100) selon la revendication 5, **caractérisé en ce que** la barrette lumineuse s'étend également le long du cadre entier à la manière d'un cadre.

7. Dispositif (100) selon la revendication 5 ou 6, **caractérisé en ce que** les éléments d'éclairage peuvent être commandés séparément et sont commandés afin que les éléments d'éclairage de la barrette lumineuse soient éclairés avec une intensité différente et/ou les uns après les autres.

8. Dispositif (100) selon l'une quelconque des revendications 5 à 7, **caractérisé en ce que** la barrette lumineuse s'étend également à la manière d'un cadre et est intégrée avec une surface plane dans le cadre (114).

9. Dispositif (100) selon l'une quelconque des revendications 1 à 8, **caractérisé en ce que** le miroir (103) partiellement transparent lui-même est formé comme un écran tactile sensible au toucher.

10. Dispositif (100) selon l'une quelconque des revendications 2 à 9, **caractérisé en ce que** le dispositif d'affichage (110) est formé comme un écran tactile sensible au toucher, et **en ce que** le miroir (103) partiellement transparent est au moins partiellement électroconducteur et est en contact avec le dispositif d'affichage de telle manière que l'écran tactile du dispositif d'affichage (110) puisse être actionné à travers le miroir (103) partiellement transparent.

11. Dispositif (100) selon l'une quelconque des revendications 1 à 10, **caractérisé en ce que** le miroir (103) partiellement transparent, le au moins un dispositif d'affichage (110) et la au moins une caméra (101) sont agencés dans un boîtier (107), et **en ce que** le boîtier (107) est réglable en hauteur.

12. Procédé de détection d'une image biométrique du visage d'une personne avec un dispositif (100) selon l'une quelconque des revendications 1 à 11 comprenant les étapes suivantes:
A) positionnement d'une personne devant le côté avant (104) réfléchissant du miroir (103) partiellement transparent de telle manière que le visage de la personne soit réfléchi sur la surface (104) réfléchissante,
B) détection du visage de la personne par la au moins une caméra (101) à travers le miroir (103) partiellement transparent et génération d'une première représentation ou d'une première suite de représentations,
C) vérification établissant si la représentation ou la suite de représentations générée au moyen de la au moins une caméra (101) satisfait à au moins une demande prédéfinie,
D) en cas d'écart de la première représentation ou suite de représentations générée par rapport à la au moins une demande prédéfinie, émission d'une information ou instruction dans l'unité de sortie (111) comme guidage utilisateur optique ou acoustique pour la génération d'une réalité augmentée, et
E) prise d'une autre représentation ou suite de représentations par la caméra (101).

13. Procédé selon la revendication 12, **caractérisé en ce que** le dispositif de commande (102) réalise une détermination de position d'une pluralité de points d'orientation dans la au moins une représentation ou suite de représentations par rapport à la caméra (101).

14. Procédé selon la revendication 13, **caractérisé en ce que** le dispositif de commande (102) associe l'émission de l'information ou de l'instruction au moins à l'un des points d'orientation de telle manière que l'information ou l'instruction soit incrustée sur le dispositif d'affichage (110) dans la zone du point correspondant au point d'orientation sur la représentation et/ou sur l'image de miroir.

15. Procédé selon la revendication 13 ou 14, **caractérisé en ce que** les points d'orientation prédéterminés sont la bouche et/ou la commissure des lèvres et/ou les yeux et/ou les coins des yeux et/ou le menton et/ou le nez et/ou le bout du nez.
